# EUROPEAN PATENT SPECIFICATION

(11) **EP 2 619 507 B1**
(45) Date of publication and mention of the grant of the patent: **06.11.2019**
(21) Application number: 11773910.2
(22) Date of filing: 20.09.2011
(51) Int. Cl.: F23R 3/44, F23R 3/28, F23R 3/14, F23C 6/04, F23R 3/34

(54) **COMBUSTOR WITH A SINGLE LIMITED FUEL-AIR MIXING BURNER AND RECUPERATED MICRO GAS TURBINE**
BRENNKAMMER MIT EINEM EINZIGEN BEGRENZTEN BRENNSTOFF-LUFT-MISCHUNGSBRENNER UND WIEDERHERGESTELLTE MIKROGASTURBINE
CHAMBRE DE COMBUSTION DOTÉE D'UN UNIQUE BRÛLEUR À MÉLANGE AIR/CARBURANT LIMITÉ ET MICRO-TURBINE À GAZ RÉCUPÉRÉ

(30) Priority: 21.09.2010 NL 2005381
(43) Date of publication of application: 31.07.2013
(73) Proprietor: Micro Turbine Technology BV, 5633 AE Eindhoven (NL)
(72) Inventor: SHAKARIYANTS, Savad, NL-5212 CP 's-Hertogenbosch (NL)
(74) Representative: Dekker-Garms, Alwine Emilie
(86) International application number: PCT/NL2011/050636
(87) International publication number: WO 2012/039611

(56) References cited:
- EP-A1- 0 933 594
- EP-A1- 1 445 465
- EP-A1- 2 085 695
- EP-A2- 0 638 768
- WO-A1-01/18371
- US-A- 3 853 273
- US-A- 5 163 287
- US-A- 5 477 685
- US-A1- 2004 098 965
- US-E- R E23 149

## Description

### Technical field of the invention

The invention relates to a combustor comprising:
- a casing having a cylindrical wall provided with an opening for compressed air;
- a liner being within said casing and having a further cylindrical wall at a distance from the casing wall, an outlet opening on one end and an inlet opening on the other end; and
- a single burner comprising a fuel injector, flame stabilization device and the hardware of the liner inlet (liner head).

### Background of the invention

A combustor is known from US2010/0126174A, and also from WO01/18371A1. This combustor includes: a flame tube having, in the direction of the flow, a mixing zone for mixing the fuel with air to form a fuel-air mixture, as well as a primary combustion zone and a post-primary combustion zone. At least one opening is being provided in the area of the mixing zone and in the area of the post-primary combustion zone in order to conduct compressed air into the flame tube. The supplied compressed air is used to cool the flame tube and passes, via the openings in the area of the mixing zone and in the area of the post-primary combustion zone, partly into the mixing zone and into the post-primary combustion zone.

Other combustors are known from US2009/019855A1, US2010/000218A1, US2010/071377A1, and WO 00/75573A1. These combustors have main burners that require assistance from pilot burners to ensure stable and complete combustion, as well as reliable light-off at all operating conditions.

Yet another combustor is known from US2002/148232A1, which has multiple burners. None of the individual burners is capable to ensure adequate combustion performance at all operating conditions. Different burners, also in different combinations, have to operate at different operating conditions.

A suitable combustion chamber for a recuperated micro gas turbine is challenged by the following factors:
- Combustor pressure loss has to remain low. With the low compressor pressure ratio of recuperated micro turbines, pressure loss substantially penalizes the power output and efficiency. Typically, the relative burner pressure loss cannot exceed 2%.
- Emission of undesirable chemicals has to be low, namely UHC, CO and NOx. CO and UHC can be effectively oxidized if flow temperature is maintained above 1500 °C (-1800 K). At these temperatures, NOx formation accelerates. However, NOx has to be maintained at single-digit ppm.
- Stable and complete combustion has to be maintained along with low NOx at all operating points between base load and part load. At the same time, stable, complete and low NOx operation has to be guaranteed at light- off and during transients with both cold and hot recuperator.

### Summary of the invention

It is an object of the present invention to provide a combustor which is optimized for:
- Operation in a recuperated micro gas turbine;
- Low pressure loss;
- Complete combustion and therefore low emission of CO and UHC;
- Low emission of NOx;
- Stable and low-emission operation at base load (with hot recuperator);
- Stable and low-emission operation at part load;
- Reliable light-off at cold conditions (with cold recuperator);
- Reliable light-off at other conditions;
- Stable and low-emission operation during transients;
- Stable and low-emission operation at other conditions; and
- Low cost.

To this end, in the combustor according to the invention, the relative position of the fuel injector and flame stabilization device in the burner is such that during operation the burner stages first complete combustion of the fuel in the air through the air passages of the flame stabilization device where fuel is injected and then mixing of burned gases with the air through the neighboring passages such that NOx can never increase above single-digit ppm.

The fuel injector position relative to the flame stabilization device is chosen as to:
- On the one hand, give the necessary residence time for the fuel to combust in the air through the air passages where fuel is injected; and
- On the other hand, mix in the air through the neighboring passages before high NOx levels have been formed.

In other words, the burner according to the invention stages first combustion of the fuel in the given part of the air and then mixing of burned gases with the remaining air. In particular, combustion is complete and mixing occurs such that NOx can never increase above single-digit ppm.

The fuel injector is present in the middle of the liner inlet opening, and the flame stabilization device is present in the inlet opening around the fuel injector and extends directly from the fuel injector to the boundary wall of the inlet opening.

Further, the flame stabilization device comprises two concentrically cylindrical rings and vanes extending in the radial direction from one ring to the other ring and being at an angle with the axial direction, wherein an air passage is present between two neighboring vanes of the flame stabilization device, and the geometry of the said rings, vanes and air passages results in a pressure loss over the flame stabilization device less than 1.5%.

The flame stabilization device has a swirl strength and air passage cross section such that the pressure loss over the device is less than 1.5%. The pressure loss is dependent, among other parameters, on the geometry of the air passages, the flow rate and the flow density. The geometry of the air passages determines the swirl strength. Contrary to the common knowledge and experience, it has been established and confirmed experimentally that stable burning can be maintained in the combustor according to the invention even when the pressure loss is between 1% and 1.5%.

The flame stabilization device and the fuel injector form together with the liner inlet hardware a single burner, which guarantees both stable and complete combustion and low NOx at all operating regimes - steady state and transient. The same single burner guarantees reliable light-off at all conditions encountered in operation. This single burner is not assisted by any other burner.

Still further, the number of vanes in the flame stabilization device is such that only part of the air through the flame stabilization device can mix with fuel.

An air passage is present between each two neighboring vanes of the flame stabilization device. The fuel injector is provided with injection holes that inject fuel into a number of the air passages such that the fuel is injected only in one passage from each set of two neighboring passages. Such fuel injection allows limited fuel-air mixing, where fuel is mixed with only part of the air. Due to this, the fuel-air mixture formed in the passages where fuel is injected is optimal for high stability of burning. However, high NOx levels can also form in the burned gases. Formation of high NOx levels is prevented though, by quick mixing of these burned gases with the air that passes through the neighboring passages.

The invention further relates to a recuperated micro gas turbine comprising:
- an air compressor having an air inlet and an air outlet;
- a recuperator having an inlet and outlet for gases to be preheated and an inlet and outlet for hot gases to be cooled, wherein the inlet for gases to be heated is connected to the outlet of the air compressor;
- a combustor according to the invention described above having an air inlet and an outlet for burned gases, wherein the inlet is being connected to the outlet of gases heated in the recuperator;
- a fuel delivery device (a compressor in case of gaseous fuels and a pump in case of liquid fuels) connected to the combustor; and
- a turbine having an inlet connected to the outlet of the combustor and an outlet connected to the inlet of the gases to be cooled in the recuperator.

The invention further relates to a method for operating a gas turbine according to the invention, wherein the temperature of gases coming from the turbine is kept constant at the recuperator inlet. By this, the flame stabilization is improved at part-load operating points where the shaft power is less than at the base-load operating point. This improvement is realized by limiting reduction in the fuel-air ratio associated with modulation of the gas turbine from the base load to part load.

There is a great potential for employing micro gas turbines in an electrical power range from 1 kWe to 5 kWe. In particular, micro gas turbines are environmentally and cost effective for distributed power and/or heat and/or cooling generation in households, hotels, farms, restaurants, offices, etc., as well as for vehicular applications.

The recuperated micro gas turbine according to the invention can be for:
- Electrical power generation systems.
- The use in combined heat and electrical power systems, wherein the gas turbine drives an electrical generator to produce electrical power, and the heat in the gas turbine exhaust is - optionally - utilized for heating, such as space heating, water heating, etc. The heat can be also utilized to produce cooling.
- The use in various heat and power systems in combination with other energy conversion devices, such as fuel cells, Rankine engines, etc.
- The use in auxiliary systems in automotive, maritime and other vehicles.

### Brief description of the drawings

The invention will be further elucidated below on the basis of drawings. These drawings show an embodiment of the combustor, combustor burner and recuperated micro gas turbine according to the invention. In the drawings:
- Figure 1 shows an embodiment of the recuperated micro gas turbine according to the invention;
- Figure 2 shows the combustor of the recuperated micro gas turbine;
- Figure 3 shows the flame stabilization device of the combustor;
- Figure 4 shows the fuel injector of the combustor; and
- Figure 5 shows a burner of the combustor in cross section composed of the flame stabilization device, fuel injector and liner inlet/head hardware.

### Detailed description of the drawings

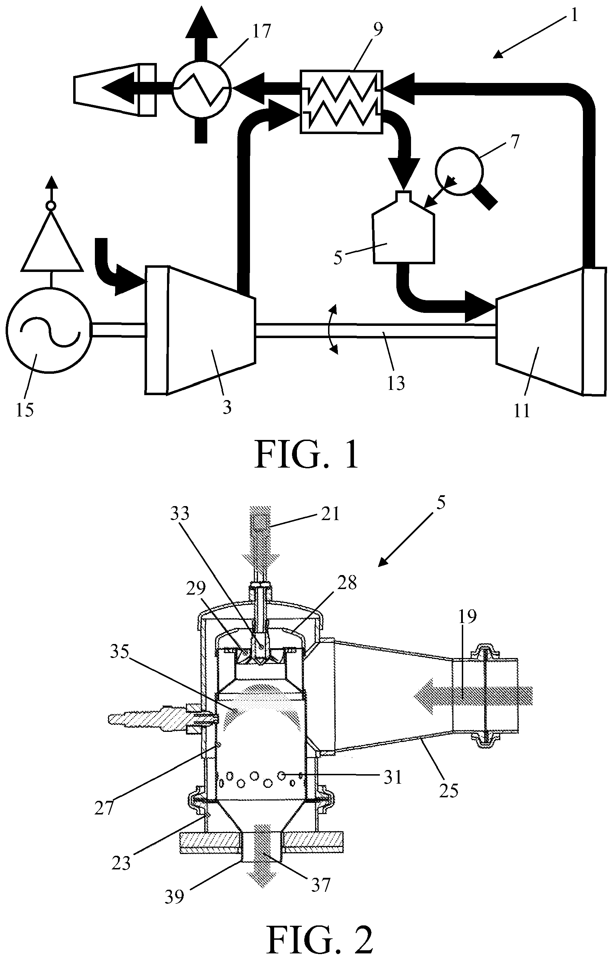

In Figure 1, an embodiment of the recuperated micro gas turbine is shown according to the invention. The recuperated micro gas turbine 1 comprises an air compressor 3, a combustor 5, a fuel compressor 7 (for gaseous fuels) or a pump (for liquid fuels), a recuperator 9 and a turbine 11. The turbine drives the air compressor via a shaft 13. The excess mechanical power produced by the turbine is converted into electrical power in a generator 15. The generator is either coupled to the turbine- compressor shaft or has its rotor mounted on the turbine-compressor shaft. After the recuperator, the gases can be directed either to a gas-to- water heat exchanger 17 or other equipment for either heat or cooling production.

The combustor 5, see Figure 2, typically receives air 19 compressed in the gas turbine air compressor and preheated in the recuperator. Fuel 21 to the combustor is delivered by either fuel compressor (for gaseous fuels) or fuel pump (for liquid fuels). The geometric envelope of the combustor is delimited by the casing 23. The air flow is diffused in the casing inlet diffuser 25 and dumped into the casing. Inside the casing, a liner 27 (or flame tube) is mounted. The inlet or head 28 of the liner is equipped with a flame stabilization device 29. The liner is also equipped with a system of air admission holes 31 and cooling arrangements. Combustion is staged inside the liner. The air flow is divided between the flame stabilization device 29, cooling arrangement and air admission holes 31. The fuel injector 33 is usually located in the vicinity of the flame stabilization device 29. The air flow through the flame stabilization device is usually the combustion air. Fuel is injected and mixed with this air. The flame stabilization device 29, fuel injector 33 and liner inlet/head hardware 28 are commonly referred to as burner. The flame 35 is stabilized downstream the fuel stabilization device 29. After combustion has been either fully or essentially completed, the air through the air admission holes 31 is mixed with the products of combustion. This air is called dilution air. Cooling air is gradually mixed with the gases. Diluted gases 37 are directed into the turbine at the combustor outlet 39.

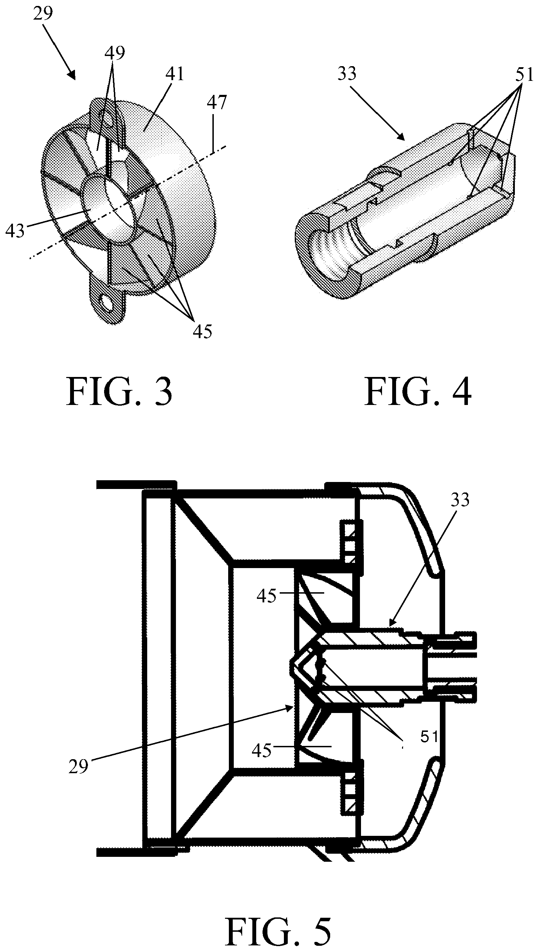

In Figure 3, the flame stabilization device 29 is shown. The flame stabilization device comprises two concentrically cylindrical rings 41 and 43 and a number of vanes 45 extending in radial direction from one ring to the other ring and being at an angle with the axial direction 47. Air passages 49 are present between the vanes.

In Figure 4, the fuel injector 33 of the combustor is shown. The fuel injector comprises a number of injection holes 51 over the circumference of the injector such that fuel is only injected into half the number of air passages in the flame stabilization device, whereby fuel is injected alternately in one passage and no fuel is injected in the next passage.

In Figure 5, a cross section of the burner composed of the flame stabilization device, fuel injector and liner head hardware is shown. The position of the fuel injector 33 relative to the flame stabilization device 29 is chosen for optimal limited fuel-air mixing. It allows the burner to stage first complete combustion of the fuel in the given part of the air and then mixing of burned gases with the remaining air such that NOx can never increase above single-digit ppm.

## Claims

1. Combustor (5) comprising:
- a casing (23) having a cylindrical wall provided with an opening for compressed air;
- a liner (27) being within said casing (23) and having a further cylindrical wall at a distance from the casing wall, an outlet opening on one end and an inlet opening on the other end; and
- one single burner comprising a fuel injector (33) to inject fuel (21) into the liner (27) and a flame stabilization device (29) comprising air passages (49),
wherein the relative position of the fuel injector (33) and flame stabilization device (29) in the burner is such that during operation the burner stages first complete combustion of the fuel (21) in the air through the air passages (49) of the flame stabilization device (29) where fuel (21) is injected and then mixing of burned gases with the air through the neighboring passages (49), wherein the fuel injector (33) is present in the middle of the liner inlet opening, and the flame stabilization device (29) is present in the inlet opening around the fuel injector (33) and extends directly from the fuel injector (33) to the boundary wall of the inlet opening, wherein the flame stabilization device (29) comprises two concentrically cylindrical rings (41, 43) and vanes (45) extending in the radial direction from one ring to the other ring and being at an angle with the axial direction, wherein an air passage (49) is present between two neighboring vanes (45) of the flame stabilization device (29), and the geometry of the said rings (41, 43), vanes (45) and air passages (49) results in a pressure loss over the flame stabilization device (29) less than 1.5%, and wherein the fuel injector (33) is provided with injection holes (51) which during operation inject fuel into the airflow through a part of the total number of the air passages (49).

2. Combustor (5) according to claim 1, wherein the injection holes (51) are arranged over the circumference of the fuel injector (33) such that fuel (21) is only injected into half the number of air passages (49) in the flame stabilization device (29).

3. Recuperated micro gas turbine (1) comprising:
- an air compressor (3) having an air inlet and an air outlet;
- a recuperator (9) having an inlet and outlet for gases to be preheated and an inlet and outlet for hot gases to be cooled, wherein the inlet for gases to be heated is connected to the outlet of the air compressor (3);
- a combustor (5) according to claim 1 or 2 having an air inlet and an outlet for burned gases, wherein the inlet is connected to the outlet of gases heated in the recuperator (9),
- a fuel delivery device connected to the combustor (5), and
- a turbine (11) having an inlet connected to the outlet of the combustor (5) and an outlet connected to the inlet of the gases to be cooled of the recuperator (9).

4. Recuperated micro gas turbine (1) according to claim 3, wherein the burner of the combustor (5) is the single and non-assisted burner in the recuperated micro gas turbine (1).

5. Method for operating a recuperated gas turbine (1) according to claim 3, wherein the temperature of gases coming from the turbine (11) is kept constant at the recuperator inlet.

## Patentansprüche

1. Brennkammer (5), umfassend:
- ein Gehäuse (23) mit einer zylindrischen Wand, die mit einer Öffnung für Druckluft versehen ist;
- eine Auskleidung (27), die sich innerhalb des Gehäuses (23) befindet und eine weitere zylindrische Wand in einem Abstand von der Gehäusewand, eine Auslassöffnung an einem Ende und eine Einlassöffnung am anderen Ende aufweist; und
- einen einzelnen Brenner, der ein Kraftstoffeinspritzventil (33) zum Einspritzen von Kraftstoff (21) in die Auskleidung (27) und eine Flammenstabilisierungsvorrichtung (29) mit Luftkanälen (49) umfasst,
wobei die relative Position des Kraftstoffeinspritzventils (33) und der Flammenstabilisierungsvorrichtung (29) im dem Brenner derart ist, dass der Brenner während des Betriebs zunächst eine vollständige Verbrennung des Kraftstoffs (21) in der Luft durch die Luftkanäle (49) der Flammenstabilisierungsvorrichtung (29), in die Kraftstoff (21) eingespritzt wird, und dann eine Mischung von verbrannten Gasen mit der Luft durch die benachbarten Kanäle (49) durchführt, wobei das Kraftstoffeinspritzventil (33) in der Mitte der Einlassöffnung der Auskleidung vorhanden ist und die Flammenstabilisierungsvorrichtung (29) in der Einlassöffnung um das Kraftstoffeinspritzventil (33) herum vorhanden ist und sich direkt von dem Kraftstoffeinspritzventil (33) bis zu der Begrenzungswand der Einlassöffnung erstreckt, wobei die Flammenstabilisierungsvorrichtung (29) zwei konzentrisch zylindrische Ringe (41, 43) und Lamellen (45) umfasst, die sich in Radialer Richtung von einem Ring zu dem anderen Ring erstrecken und in einem Winkel mit der axialen Richtung stehen, wobei ein Luftkanal (49) zwischen zwei benachbarten Lamellen (45) der Flammenstabilisierungsvorrichtung (29) vorhanden ist, und die Geometrie der Ringe (41, 43), Lamellen (45) und Luftkanäle (49) zu einem Druckverlust über der Flammenstabilisierungsvorrichtung (29) von weniger als 1,5% führt, und wobei das Kraftstoffeinspritzventil (33) mit Einspritzlöchern (51) versehen ist, die während des Betriebs Kraftstoff in den Luftstrom durch einen Teil der Gesamtzahl der Luftkanäle (49) einspritzen.

2. Brennkammer (5) nach Anspruch 1, wobei die Einspritzlöcher (51) über den Umfang des Kraftstoffeinspritzventils (33) so angeordnet sind, dass Kraftstoff (21) nur in die Hälfte der Anzahl der Luftkanäle (49) in der Flammenstabilisierungsvorrichtung (29) eingespritzt wird.

3. Rekuperierte Mikrogasturbine (1), umfassend:
- einen Luftkompressor (3) mit einem Lufteinlass und einem Luftauslass;
- einen Rekuperator (9) mit einem Einlass und Auslass für vorzuwärmende Gase und einem Einlass und Auslass für zu kühlende heiße Gase, wobei der Einlass für zu erwärmende Gase mit dem Auslass des Luftkompressors (3) verbunden ist;
- eine Brennkammer (5) nach Anspruch 1 oder 2 mit einem Lufteinlass und einem Auslass für verbrannte Gase, wobei der Einlass mit dem Auslass der in dem Rekuperator (9) erwärmten Gase verbunden ist,
- eine Kraftstoffzufuhrvorrichtung, die mit der Brennkammer (5) verbunden ist, und
- eine Turbine (11) mit einem Einlass, der mit dem Auslass der Brennkammer (5) und einem Auslass, der mit dem Einlass der zu kühlenden Gase des Rekuperators (9) verbunden ist.

4. Rekuperierte Mikrogasturbine (1) nach Anspruch 3, wobei der Brenner der Brennkammer (5) der Einzel- und Freibrenner in der rekuperierten Mikrogasturbine (1) ist.

5. Verfahren zum Betreiben einer rekuperierten Gasturbine (1) nach Anspruch 3, wobei die Temperatur der aus der Turbine (11) kommenden Gase am Rekuperatoreinlass konstant gehalten wird.

## Revendications

1. Dispositif de combustion (5) comprenant:
- un carter (23) comportant une paroi cylindrique pourvue d'une ouverture pour air comprimé;
- une chemise (27) placée à l'intérieur dudit carter (23) et comportant une autre paroi cylindrique à distance de la paroi du carter, une ouverture de sortie à une extrémité et une ouverture d'entrée à l'autre extrémité; et
- un brûleur simple comprenant un injecteur de combustible (33) pour injecter du combustible (21) dans la chemise (27) et un dispositif de stabilisation de flamme (29) comprenant des passages d'air (49),
dans lequel la position relative de l'injecteur de combustible (33) et du dispositif de stabilisation de flamme (29) dans le brûleur est telle que pendant le fonctionnement le brûleur active une première combustion complète du combustible (21) dans l'air à travers les passages d'air (49) du dispositif de stabilisation de flamme (29) où le combustible (21) est injecté puis un mélange des gaz brûlés avec l'air à travers les passages voisins (49), dans lequel l'injecteur de combustible (33) est présent au milieu de l'ouverture d'entrée de la chemise, et le dispositif de stabilisation de flamme (29) est présent dans l'ouverture d'entrée autour de l'injecteur de combustible (33) et s'étend directement de l'injecteur de combustible (33) à la paroi formant la limite de l'ouverture d'entrée, dans lequel le dispositif de stabilisation de flamme (29) comprend deux bagues cylindriques concentriques (41, 43) et des aubes (45) qui s'étendent dans la direction radiale d'une bague à l'autre et qui forment un angle avec la direction axiale, dans lequel un passage d'air (49) est présent entre deux aubes voisines (45) du dispositif de stabilisation de flamme (29), et la géométrie desdites bagues (41, 43), desdites aubes (45) et desdits passages d'air (49) provoque une perte de pression sur le dispositif de stabilisation de flamme (29) inférieure à 1,5 %, et dans lequel l'injecteur de combustible (33) est pourvu de trous d'injection (51) qui, pendant le fonctionnement, injectent du combustible dans le flux d'air à travers une partie du nombre total de passages d'air (49).

2. Dispositif de combustion (5) selon la revendication 1, dans lequel les trous d'injection (51) sont disposés sur la circonférence de l'injecteur de combustible (33) de telle manière que le combustible (21) n'est injecté que dans la moitié du nombre de passages d'air (49) du dispositif de stabilisation de flamme (29).

3. Microturbine à gaz (1) à récupérateur comprenant:
- un compresseur d'air (3) ayant une entrée d'air et une sortie d'air;
- un récupérateur (9) ayant une entrée et une sortie pour des gaz à préchauffer et une entrée et une sortie pour des gaz chauds à refroidir, l'entrée pour les gaz à chauffer étant reliée à la sortie du compresseur d'air (3);
- un dispositif de combustion (5) selon la revendication 1 ou 2 ayant une entrée d'air et une sortie pour les gaz brûlés, l'entrée étant reliée à la sortie de gaz chauffés dans le récupérateur (9),
- un dispositif d'alimentation en combustible relié au dispositif de combustion (5), et
- une turbine (11) ayant une entrée reliée à la sortie du dispositif de combustion (5) et une sortie reliée à l'entrée des gaz à refroidir du récupérateur (9).

4. Microturbine à gaz (1) à récupérateur selon la revendication 3, dans laquelle le brûleur du dispositif de combustion (5) est le brûleur simple et non assisté présent dans la microturbine à gaz (1) à récupérateur.

5. Procédé de mise en œuvre d'une microturbine à gaz (1) à récupérateur selon la revendication 3, dans lequel la température des gaz provenant de la turbine (11) est maintenue constante à l'entrée du récupérateur.
